# EUROPÄISCHE PATENTANMELDUNG

(11) **EP 3 594 833 A1**
(43) Veröffentlichungstag der Anmeldung: **15.01.2020**
(21) Anmeldenummer: 19184737.5
(22) Anmeldetag: 05.07.2019
(51) Int. Cl.: G06F 21/00, G06K 7/10, G06Q 20/12, G06F 16/955, G06F 3/03, G06K 19/07

(54) **SYSTEM FÜR EINEN GESTEUERTEN ZUGRIFF AUF DIGITALE MEDIENINHALTE**

(30) Priorität: 11.07.2018 DE 202018104005 U
(71) Anmelder: Tiger Media Deutschland GmbH, 20359 Hamburg (DE)
(72) Erfinder: Weitendorf, Till, 20144 Hamburg (DE)
(74) Vertreter: Lemcke, Brommer & Partner Patentanwälte Partnerschaft mbB

(57) **Zusammenfassung**

Vorgeschlagen wird ein System (10) für einen gesteuerten Zugriff auf digitale Medieninhalte, umfassend: einen Server-Computer (11); eine Computernetz-Verbindung (12); ein Lese-/Ausgabegerät (13a-13c); einen Informationsträger (1, 1'); bei dem der Server-Computer (12) digitale Medieninhalte bereithält; bei dem das Lese-/Ausgabegerät (13a-13c) über die Computernetz-Verbindung (12) mit dem Server-Computer (11) verbunden oder verbindbar ist; bei dem durch den Informationsträger (1, 1') wenigstens eine erste Information und eine wenigstens eine zweite Information gespeichert ist, welche erste Information und welche zweite Information durch das Lese-/Ausgabegerät (13a-13c) lesbar ist; bei dem das Lese-/Ausgabegerät (13a-13c) zum Ermitteln der ersten Information und der zweiten Information von dem Informationsträger (1, 1') und zur Übermittlung der ersten Information und der zweiten Information an den Server-Computer (11) wobei bei dem der Server-Computer (11) dazu ausgebildet und eingerichtet ist, in Abhängigkeit von einem Ergebnis einer gemeinsamen Überprüfung der ersten Information und der zweiten Information bestimmte Medieninhalte für eine Übertragung an das Lese-/Ausgabegerät (13a-13c) freizugeben, um diese Medieninhalte mittels des Lese-/Ausgabegeräts (13a-13c) auszugeben

## Beschreibung

Die Erfindung betrifft ein System gemäß Anspruch 1 für einen gesteuerten Zugriff auf digitale Medieninhalte.

Speziell über Computernetze, wie das weltweite Internet, lassen sich heute problemlos Medieninhalte, wie Text, Audio, Video oder Software-Anwendungen (Apps) und Kombinationen hiervon, zu jeder Zeit und an quasi beliebigen Orten konsumieren. Auch für (kleinere) Kinder lassen sich auf diese Weise Medieninhalte bereitstellen, wobei allerdings die Gewährleistung einer Zugangskontrolle, insbesondere unter dem Gesichtspunkt der Altersangemessenheit, einen wichtigen Aspekt darstellt. Außerdem ist es gerade für kleinere Kinder wichtig, dass der Zugang zu den Medieninhalten einfach und - wenn möglich - in spielerischer Weise erfolgen kann.

Der Erfindung liegt die Aufgabe zugrunde, ein System für einen gesteuerten Zugriff auf digitale Medieninhalte in einem Computernetz zu schaffen, mit dem auch (kleinere) Kinder gefahrlos und spielerisch auf bestimmte, für sie geeignete Medieninhalte zugreifen können. Außerdem soll es für den Inhaber der Verwertungsrechte an den genannten Medieninhalten möglich sein, den Zugriff quantitativ zu beschränken.

Diese Aufgabe wird gelöst durch ein System mit den Merkmalen des Anspruchs 1. Vorteilhafte Weiterbildungen des erfindungsgemäßen Systems sind Gegenstand von Unteransprüchen.

Ein erfindungsgemäßes System für einen gesteuerten Zugriff auf digitale Medieninhalte, umfasst: einen Server-Computer; eine Computernetz-Verbindung; wenigstens ein Lese-/Ausgabegerät; und wenigstens einen Informationsträger. Der Server-Computer hält digitale Medieninhalte bereit; das Lese-/Ausgabegerät ist über die Computernetz-Verbindung mit dem Server-Computer verbunden oder verbindbar; durch den Informationsträger ist wenigstens eine erste Information und eine wenigstens eine zweite Information gespeichert, welche erste Information und welche zweite Information durch das Lese-/Ausgabegerät lesbar ist; das Lese-/Ausgabegerät ist zum Ermitteln der ersten Information und der zweiten Information von dem Informationsträger und zur Übermittlung der ersten Information und der zweiten Information an den Server-Computer ausgebildet und eingerichtet; und der Server-Computer ist dazu ausgebildet und eingerichtet, in Abhängigkeit von einem Ergebnis einer gemeinsamen Überprüfung der ersten Information und der zweiten Information bestimmte Medieninhalte für eine Übertragung an das Lese-/Ausgabegerät freizugeben, um diese Medieninhalte mittels des Lese-/Ausgabegeräts auszugeben.

Für einen Zugriff auf die Medieninhalte ist somit zwingend der (physikalische) Informationsträger erforderlich. Dies erlaubt eine effiziente (quantitative) Zugangskontrolle. Außerdem ist es möglich, den Informationsträger nach Art eines Spielzeugs, einer Sammelkarte oder dgl. auszubilden, sodass sich für den Nutzer (das Kind) ein Mehrwert ergibt. Über den Informationsträger und die darauf/darin gespeicherten Informationen ist zudem eine eindeutige Identifikation von bestimmten Medieninhalten möglich, um beispielsweise eine wirksame Altersfreigabe zu implementieren. Durch die kombinierte Verwendung zweier Informationen erreicht man eine größtmögliche Fälschungs- und Betrugssicherheit. Zudem kann die Karte weitergegeben oder verkauft werden, und der neue Besitzer ist ebenso in der Lage, auf die zugehörigen Medieninhalte zuzugreifen.

Bei einer ersten Weiterbildung des erfindungsgemäßen Systems ist vorgesehen, dass die erste Information mittels eines mittels NFC lesbaren Codes oder in Form eines optisch-digitalen Codes durch den Informationsträger gespeichert ist. Entsprechend ist das Lese-/Ausgabegerät dazu ausgebildet und eingerichtet, die genannten Codearten auszulesen, z.B. indem der Nutzer einen Lesestift (Digitalstift) auf den Code richtet oder den Informationsträger in die Nähe eines NFC-fähigen Lesegeräts bringt.

NFC oder Nahfeldkommunikation ist ein auf der RFID-Technik basierender internationaler Übertragungsstandard zum kontaktlosen Austausch von Daten per elektromagnetischer Induktion mittels loser gekoppelter Spulen über kurze Strecken von wenigen Zentimetern und einer Datenübertragungsrate von maximal 424 kBit/s. Wenn hier und im Folgenden von NFC die Rede ist, soll dies aber auch alternative, vergleichbare Kommunikationstechniken miteinschließen.

Optisch-digitaler Code basiert vorzugsweise auf einem auf Papier oder dgl. aufgedruckten Punkt-Rastersystem. Beispielsweise wird das sog. digitale Papier mit einem Raster 0,1 mm großer Punkte mit einem Abstand von 0,3 mm bedruckt. Die Lage der einzelnen Punkte variiert geringfügig und stellt damit einen optisch erfassbaren, digitalen Code dar, der einen Digitalstift den gedruckten Code auf dem Papier ermitteln lässt. Eine Infrarotkamera im Digitalstift orientiert sich dazu an diesem Punktraster im Hintergrund der Seite. Wenn hier und im Folgenden von optisch-digitalem Code oder optischem Code bzw. OID die Rede ist, soll dies auch alternative, vergleichbare Codierungstechniken miteinschließen.

Bei einer zweiten Weiterbildung des erfindungsgemäßen Systems ist vorgesehen, dass die zweite Information mittels eines mittels NFC lesbaren Codes oder in Form eines optisch-digitalen Codes durch den Informationsträger gespeichert ist. Entsprechend ist auch in diesem Fall das Lese-/Ausgabegerät dazu ausgebildet und eingerichtet, die genannten Codearten auszulesen, z.B. indem der Nutzer einen Lesestift (Digitalstift) auf den Code richtet oder den Informationsträger in die Nähe eines NFC-fähigen Lesegeräts bringt.

Bei einer dritten Weiterbildung des erfindungsgemäßen Systems ist vorgesehen, dass der Informationsträger in Form einer Karte mit wenigstens einem aufgedruckten optisch-digitalen Code und/oder integriertem NFC-Chip ausgebildet ist. Solche Karten sind einfach und kostengünstig herstellbar und können mit Bildern, Text und anderen Inhalten/Dekorationen versehen werden. Sie bieten als Tausch- oder Sammelkarten einen zusätzlichen Mehrwert und sind dabei leicht aufzubewahren, z.B. in einer passenden Sammelmappe.

Bei einer anderen Weiterbildung des erfindungsgemäßen Systems ist vorgesehen, dass das Lese-/Ausgabegerät in Form eines (Digital-)Stifts, einer Audio-Box (Hörbox) oder eines Tablet-PC ausgebildet ist. Stifte dieser Art sind unter der Bezeichnung tiptoi® oder Ting bereits bekannt. Sie dienen zum Auslesen von optischen Codes (OID- oder Grid-Codes) und stehen über eine Drahtlos-Verbindung mit dem Internet in Verbindung. Tablet-PCs sind in vielfältiger Ausführung, auch mit NFC-Fähigkeit, bekannt. Bei der genannten Audio-Box handelt es sich um ein spezielles, besonders kindgerechtes NFC-fähiges Gerät, das im Wesentlichen nur zur Wiedergabe von Audioinhalten aus dem Internet konzipiert ist und ebenfalls über eine Drahtlos-Verbindung mit dem Internet in Verbindung steht. Die Wiedergabe kann in Form von Streaming bei dauerhaft bestehender Internet-Verbindung oder offline nach vorherigem Download erfolgen.

Bei noch einer anderen Weiterbildung des erfindungsgemäßen Systems ist vorgesehen, dass zum Lesen der ersten und zweiten Information und zur Ausgabe von Medieninhalten ein kombiniertes Lese-/Ausgabegerät vorgesehen ist, sodass sich eine besonders einfache Bedienbarkeit ergibt, weil nur ein Gerät zu benutzen ist. Alle vorstehend genannten Geräte kommen hierfür in Frage.

Bei einer wieder anderen Weiterbildung des erfindungsgemäßen Systems ist vorgesehen, dass zum Lesen der ersten und zweiten Information und zur Ausgabe von Medieninhalten getrennte Lese-/Ausgabegeräte vorgesehen sind. Zum Beispiel könnte ein Stift zum Lesen der Informationen dienen, der mit einem externen Lautsprecher, einem Tablet-PC oder der Audio-Box zusammenwirkt, um die Ausgabe mittels eines von dem Stift getrennten Geräts vorzunehmen.

Bei einer bevorzugten Weiterbildung des erfindungsgemäßen Systems ist vorgesehen, dass als Medieninhalte Audio-, Video-, eBook- oder App-Inhalte bereitgehalten sind. Die Art der jeweils verwendbare Medieninhalte wird dabei von der Art des genutzten Lese-/Ausgabegeräts abhängen: Audio-Inhalte eignen sich z.B. für die Audio-Box und den Stift, während Videos und Apps nur mit dem Tablet-PC genutzt werden können.

Bei einer anderen bevorzugten Weiterbildung des erfindungsgemäßen Systems ist deshalb vorgesehen, dass der Server-Computer ausgebildet und eingerichtet ist zur Übertragung von Metadaten zu jeweiligen Medieninhalten an das Lese-/Ausgabegerät. Diese Metadaten können die Art der verfügbaren Medieninhalte genauer spezifizieren.

Bei einer besonders bevorzugten Weiterbildung des erfindungsgemäßen Systems ist dann weiter vorgesehen, dass das Lese-/Ausgabegerät ausgebildet und eingerichtet ist zur Selektion von nutzbaren Medieninhalten, insbesondere anhand der genannten Metadaten. Auf diese Weise "erkennt" das Lese-/Ausgabegerät, welche Art von Medieninhalten es nutzen kann.

Bei einer vorteilhaften Weiterbildung des erfindungsgemäßen Systems ist vorgesehen, dass die Verbindung zwischen Lese-/Ausgabegerät und Server-Computer drahtlos ausgebildet ist, worauf bereits wiederholt hingewiesen wurde. Dies kann den Nutzerkomfort deutlich vergrößern.

Bei einer anderen vorteilhaften Weiterbildung des erfindungsgemäßen Systems ist vorgesehen, dass das Lese-/Ausgabegerät ausgebildet und eingerichtet ist zur Anforderung von Medieninhalten mittels Übermittlung der ersten Information und der zweiten Information an den Server-Computer. Auf diese Weise lassen sich die Medieninhalte gegen missbräuchliche Nutzung sichern:
Bei der ersten Information handelt es sich im Falle der Nutzung eines NFC-Chips vorzugsweise um eine beispielsweise 7 Byte große sog. Unique Id (UID) des Chips, die werkseitig fest vorgegeben und nicht ohne erheblichen Aufwand - wenn überhaupt - änderbar ist. Bei der zweiten Information kann es sich dann um einen z.B. 13-stelligen Sicherheitscode handeln, der prinzipiell frei vergeben und entsprechend auch gefälscht werden kann. Da im Rahmen der Erfindung vorgesehen ist, nur in Abhängigkeit von einem Ergebnis einer gemeinsamen Überprüfung der ersten Information und der zweiten Information bestimmte Medieninhalte für eine Übertragung an das Lese-/Ausgabegerät freizugeben, um diese Medieninhalte mittels des Lese-/Ausgabegeräts auszugeben, kann sichergestellt werden, dass kein unberechtigter Zugriff auf die Medieninhalte erfolgt. Zwar wäre es möglich, sich die zweite Information unberechtigter Weise zu verschaffen und zu duplizieren, jedoch wäre die zugehörige erste Information dann unpassend. Wenn also der Server-Computer über eine "Liste" mit zulässigen Kombinationen aus erster und zweiter Information verfügt, kann er Medien-Anforderungen ablehnen, die auf einer unzulässigen Kombination aus erster und zweiter Information beruhen.

Im Falle der Nutzung von optischen Codes (OID Codes, vorzugsweise OID3 Codes) handelt es sich bei der ersten Information vorzugsweise um einen ersten (Initialisierungs-)Code (eine Zahl) aus einem ersten Wertebereich, beispielsweise und ohne Beschränkung zwischen 0 und 200.000. Bei der zweiten Information kann es sich dann um einen weiteren Code (eine Zahl) aus einem zweiten, insbesondere größeren Wertebereich handeln, beispielsweise und ohne Beschränkung zwischen 0 und 500.000. Die zweite Information könnte z.B. in Form eines "Play"-Symbols codiert sein. Da im Rahmen der Erfindung vorgesehen ist, nur in Abhängigkeit von einem Ergebnis einer gemeinsamen Überprüfung der ersten Information und der zweiten Information bestimmte Medieninhalte für eine Übertragung an das Lese-/Ausgabegerät freizugeben, um diese Medieninhalte mittels des Lese-/Ausgabegeräts auszugeben, kann auch hier sichergestellt werden, dass kein unberechtigter Zugriff auf die Medieninhalte erfolgt. Zwar wäre es möglich, sich eine der beiden Informationen unberechtigter Weise zu verschaffen und zu duplizieren, wegen des eingeschränkten Wertebereichs z.B. durch einen "brute force"-Angriff. Jedoch ergibt sich zusammen mit der anderen Information ein in der Praxis zu großer Wertebereich. Wenn also der Server-Computer wiederum über eine "Liste" mit zulässigen Kombinationen aus erster und zweiter Information verfügt, kann er auch hier Medien-Anforderungen ablehnen, die auf einer unzulässigen Kombination aus erster und zweiter Information beruhen.

Bei einer besonders vorteilhaften Weiterbildung des erfindungsgemäßen Systems ist vorgesehen, dass das Lese-/Ausgabegerät nur zusammen mit dem Informationsträger zur Ausgabe von Medieninhalten nutzbar ist. Dies lässt sich insbesondere bei Verwendung der NFC-Technologie realisieren, weil dann sichergestellt werden kann, dass das Lese-/Ausgabegerät nur nutzbar ist, wenn sich der Informationsträger mit dem NFC-Chip in der Nähe befindet. Der Informationsträger erfährt hierdurch eine Aufwertung.

Vorzugsweise ist bei einer Weiterbildung des erfindungsgemäßen Systems noch vorgesehen, dass der Informationsträger bestimmte Medieninhalte eindeutig identifiziert, ggf. in Abhängigkeit von einer Kombination aus erster und zweiter Information. Hierauf wurde bereits hingewiesen. Auf diese Weise lässt sich sicherstellen, dass insbesondere kindliche Nutzer nur auf altersgerechte Inhalte zugreifen können.

In Weiterbildung des erfindungsgemäßen Systems kann auch noch vorgesehen sein, dass der Server-Computer dazu ausgebildet und eingerichtet ist, bestimmte Medieninhalte entsprechend einer Kombination aus erster Information und zweiter Information für eine Übertragung an das Lese-/Ausgabegerät zu sperren, wenn eine Kombination aus erster Information und zweiter Information während eines vorgegebenen Zeitintervalls mehr als eine vorgegebene Anzahl von Malen und/oder von mehr als einer vorgegebenen Anzahl von Lese-/Ausgabegeräten übermittelt wurde. Auf diese Weise lässt sich verhindern, dass beispielsweise ein Informationsträger mit optischen Codes einfach kopiert wird. Alle Kopien hätten dann dieselbe Kombination aus erster Information und zweiter Information, und der Server-Computer würde bemerken, dass diese Kombination wiederholt und von verschiedenen Geräte aus übermittelt wird und könnte die Übertragung sperren, vorzugsweise unter Ausgabe einer spezifischen Fehlermeldung.

In Weiterbildung des erfindungsgemäßen Systems kann schließlich noch vorgesehen sein, dass der Informationsträger neben einer Anzahl, vorzugsweise Mehrzahl optisch-digitaler Codes auch einen NFC-Chip aufweist, wobei der Server-Computer dazu ausgebildet und eingerichtet ist, Medieninhalte zu einer Kombination von auf dem NFC-Chip gespeicherter erster und zweiter Information für eine Übertragung an das Lese-/Ausgabegerät erst dann freizugeben, wenn zuvor eine vorbestimmte, zu der Kombination gehörige Anzahl, Abfolge oder Auswahl des/der optisch-digitalen Codes von dem Lese-/Ausgabegerät an den Server-Computer übermittelt wurde. Auf diese Weise kann eine Art Belohnungssystem etabliert werden: Bestimmte Medieninhalte sind erst verfügbar, wenn zuvor bestimmte Aufgaben oder dgl. gelöst bzw. Fragen beantwortet wurden. Dies geschieht vorzugsweise mittels eines (Digital-)Stifts, der dazu verwendet wird, eine vorbestimmte, zu den betreffenden Medieninhalten gehörige Anzahl, Abfolge oder Auswahl von optisch-digitalen Codes an den Server-Computer zu übermitteln. Beispielsweise und ohne Beschränkung muss zunächst eine auf dem Informationsträger aufgedruckte Rechenaufgabe gelöst werden, indem man mit dem Stift den zur Lösung gehörigen optischen Code auswählt, woraufhin der Stift die betreffende Information an den Server-Computer übermittelt. Der als Belohnung dienende Medieninhalt ist dann freigeschaltet und kann nach Maßgabe des NFC-Chips im Zusammenwirken mit dem Server-Computer zu dem Lese-/Ausgabegerät übertragen und dort ausgegeben werden.

Wenn in dieser Anmeldung von "Übertragung" oder "übertragen" die Rede ist, schließt dies neben einem klassischen Download immer auch ein Streaming der betreffenden Medieninhalte mit ein.

Wenn in dieser Anmeldung davon die Rede ist, dass ein Gerät "dazu ausgebildet oder eingerichtet ist", eine bestimmte Aktion oder Handlung durchzuführen, kann damit eine hardwaretechnische Ausgestaltung, eine softwaretechnische Ausgestaltung, eine firmwaretechnische Ausgestaltung des Geräts oder eine Kombination dieser Ausgestaltungsformen umfasst sein.

Gemäß einer bevorzugten Ausgestaltung des erfindungsgemäßen Systems sind für den Zugriff auf Medieninhalte per NFC Karte oder OID die folgenden Schritte notwendig:
a) Das Lese-/Ausgabegerät oder Device (Stift, Box, Tablet) muss Zugang zum Internet oder einem vergleichbaren Computernetz haben (sog. "WLAN Onboarding").
b) Der Produktcode (Code-Daten auf der NFC Karte oder optischer OID Code, entsprechend den ersten und zweiten Informationen) wird gelesen (das Produkt entspricht dem eingangs definierten Informationsträger).
c) Dieser Produktcode wird zur Validierung an das Backend (Server-Computer) geschickt.
d) Das Backend empfängt den Produktcode und prüft,
   d1) ob zwei gelesene OID Codes (die erste und die zweite Information) in Kombination einen validen Produktcode darstellen bzw.
   d2) ob ein Sicherheitscode (zweite Information) in Verbindung mit einer eindeutigen NFC-Chip-Id (erste Information) einen validen Produktcode darstellen.
e) Bei invaliden Code-Kombinationen aus erster und zweiter Information antwortet das Backend mit einer Fehlermeldung.
f) Bei einer validen Code-Kombination antwortet das Backend mit den Metadaten zu dem zugehörigen Produkt, welche Links auf die verschiedenen Medieninhalte zu dem Produkt enthalten (Audio, Video, eBook, App).
g) Das Device (auch: Endgerät) selektiert den von ihm abspielbaren Medieninhalt und lädt diesen aus dem Backend herunter, wobei wiederum die Code-Kombination als Autorisierung mitgeschickt werden kann.
h) Bei valider Code-Kombination liefert das Backend die Mediendaten an das Device.
i) Die für dieses Device bestimmten Medieninhalte werden abgespielt.

In den Informationsträgern können standardisierte NFC-Chips verbaut werden, die von den Herstellern der Karte zugekauft werden. Dabei kommen bevorzugt die folgenden Standards zum Einsatz:
Die verwendeten Kommunikationstechniken und -protokolle entsprechen der Norm ISO/IEC14443.

Die Speichergrößen und Funktionen der Chips entsprechen vorzugsweise den Definitionen NTAG213 oder NTAG216 (https://www.nxp.com/docs/en/datasheet/NTAG213_215_216.pdf).

Die Daten werden auf den Informationsträgern im NFC Data Exchange Format (NDEF) gespeichert.

Die Vorderseiten und/oder Rückseiten der Informationsträger können mit OID Codes (Codes für Optical Identification Device (OID)) bedruckt sein. Diese werden auch von anderen Herstellern für den Zugriff auf Medieninhalten verwendet oder finden Anwendung zum Kodieren von Informationen in Druckern.

Die Informationsträger enthalten - wie vorstehend detailliert beschrieben - Codes, die den Zugriff auf Medieninhalte (Audiobooks, Videos, eBooks, Mobile-Apps) ermöglichen. Je nach Funktionsumfang (Lautsprecher, Bildschirm, Eingabemöglichkeit) der unterschiedlichen Lese- und Ausgabegeräte können die Inhalte entweder akustisch, visuell oder interaktiv genutzt werden.

Die Authentifizierung des korrekten Inhalts für den Zugriff auf die Inhalte eines Informationsträgers erfolgt bevorzugt anhand eindeutiger, nur schwer zu erratender Codes, wie oben beschrieben. Diese werden von den verschiedenen Lese- und Ausgabegeräten auf unterschiedliche Weise gelesen (Codes in Form von OIDs oder NFC-Daten).

Der Zugriff auf die Medieninhalte erfolgt vorzugsweise anhand der folgenden Schritte:
- Ein Endgerät (Stift, (Hör-)Box oder Tablet) wird per Onboarding-Prozess mit dem Internet verbunden (vorzugsweise per WLAN-Zugang).
- Der Code (erste und zweite Information) wird gelesen (OID oder NFC Daten).
- Der Code wird über das Internet vorzugsweise verschlüsselt (z.B. per SSL) an das Backend (Server-Computer) übertragen.
- Das Backend validiert den Code.
- Das Backend sendet bei korrektem Code die Produktinformationen an das Endgerät.
- Das Endgerät ruft den Medieninhalt aus dem Backend ab, wobei erneut der Code als Zugriffsschlüssel verwendet wird.
- Das Endgerät spielt die Medieninhalte ab (Streaming) oder lädt sie für eine spätere (Offline-)Verwendung herunter.

Weitere Eigenschaften und Vorteile der Erfindung ergeben sich aus den nachfolgend anhand der Zeichnung beschriebenen Ausführungsbeispielen.
Figur 1 zeigt einen im Rahmen der Erfindung verwendbaren Informationsträger in verschiedenen Darstellungen;
Figur 2 zeigt einen anderen im Rahmen der Erfindung verwendbaren Informationsträger in verschiedenen Darstellungen;
Figur 3 zeigt verschiedene Ausgestaltungen des erfindungsgemäßen Systems; und
Figur 4 zeigt ein Ablaufdiagramm eines in dem System ablaufenden Verfahrens für den Zugriff auf Medieninhalte.

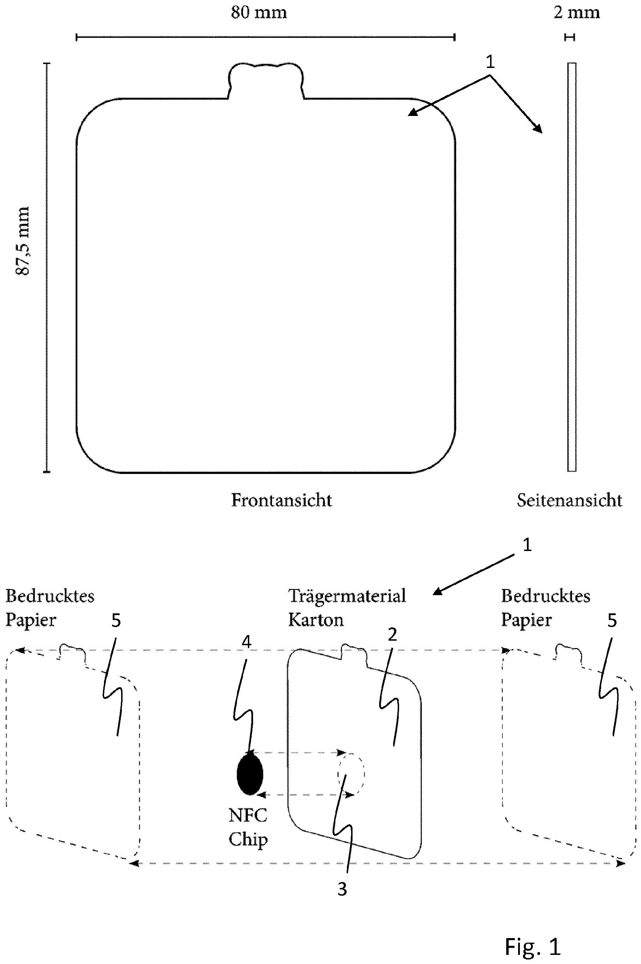

In Figur 1 ist ein im Rahmen der Erfindung verwendbarer Informationsträger 1 in Form einer Sammelkarte in verschiedenen Darstellungen gezeigt. Die angegebenen Maße und die Form sind nur als exemplarisch zu verstehen und wirken nicht beschränkend.

Unten in Figur 1 ist eine Explosionsdarstellung des Informationsträgers 1 gezeigt. Der Informationsträger 1 umfasst ein Trägermaterial 2 aus Karton oder Kunststoff, in das in einer etwa zentralen Ausnehmung 3 ein NFC-Chip 4 eingesetzt ist. Alternativ kann der Chip 4 auch in einem Bereich 3 auf das Trägermaterial aufgeklebt sein. Beidseitig ist das Trägermaterial 2 mit bedrucktem Papier 5 beschichtet (beklebt), auf welchem Papier 5 Bilder, Text oder dgl. aufgedruckt sein können. Vorzugsweise besteht ein inhaltlicher Bezug zu den mittels des Informationsträgers 1 konsumierbaren Medieninhalten. Der NFC-Chip 4 speichert bzw. enthält die erste und die zweite Information (UID bzw. Sicherheitscode), wie eingangs detailliert erläutert.

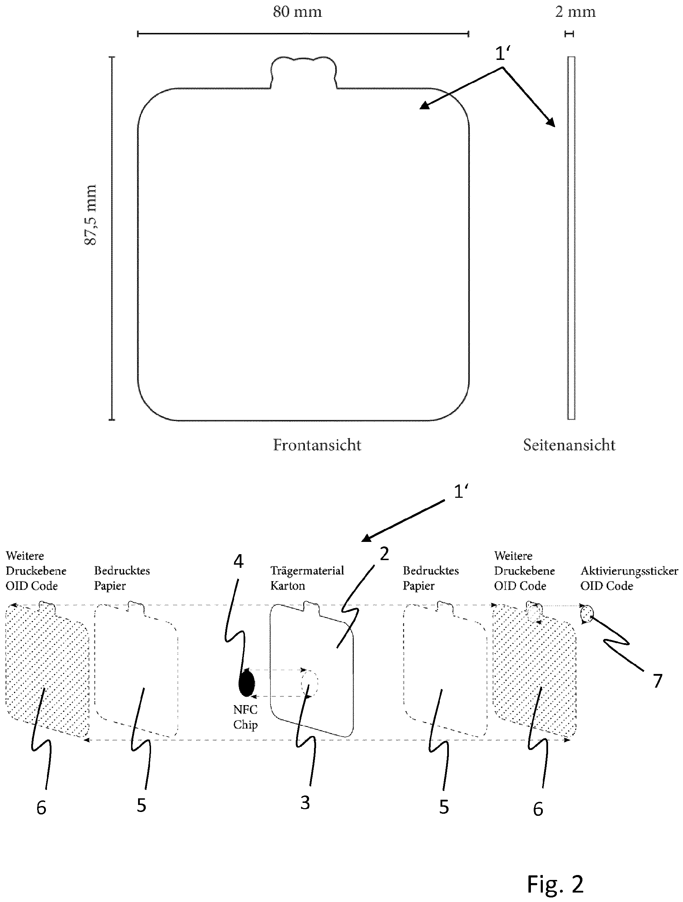

In Figur 2 ist ein weiterer im Rahmen der Erfindung verwendbarer Informationsträger 1' in Form einer Sammelkarte in verschiedenen Darstellungen gezeigt. Die angegebenen Maße und die Form sind wiederum nur als exemplarisch zu verstehen und wirken nicht beschränkend.

Unten in Figur 2 ist eine Explosionsdarstellung des Informationsträgers 1' gezeigt. Der Informationsträger 1' umfasst ein Trägermaterial 2 aus Karton oder Kunststoff, in das in einer etwa zentralen Ausnehmung 3 ein NFC-Chip 4 eingesetzt ist. Alternativ kann der Chip 4 auch in einem Bereich 3 auf das Trägermaterial aufgeklebt sein. Beidseitig ist das Trägermaterial 2 wiederum mit bedrucktem Papier 5 beschichtet (beklebt), auf welchem Papier 5 Bilder, Text oder dgl. aufgedruckt sein können. Vorzugsweise besteht auch hier ein inhaltlicher Bezug zu den mittels des Informationsträgers 1' konsumierbaren Medieninhalten. Hinzu kommt nun bei Bezugszeichen 6 eine weitere Druckebene (Bedruckung) für OID Code, welcher mit einem geeigneten (Digital-)Stift lesbar ist. Diese Bedruckung 6 muss nicht vollflächig sein, sondern sie kann auf bestimmte Flächenbereiche des Informationsträgers 1' beschränkt sein. Beispielsweise kann die Bedruckung 6 nur im einem Bereich vorgesehen sein, in dem der Informationsträger 1' ein Wiedergabe- oder "Play"-Symbol (►) aufweist (nicht dargestellt).

Bei Bezugszeichen 7 weist der Informationsträger 1' einen zusätzlichen Aktivierungssticker (-Aufkleber) auf, der ebenfalls einen OID Code trägt. Im Falle der ausschließlichen Nutzung von optischen Codes (OID Codes, vorzugsweise OID3 Codes) handelt es sich bei dem OID Code bei Bezugszeichen 7 um die Codierung der ersten Information, vorzugsweise um einen ersten (Initialisierungs-)Code (eine Zahl) aus einem ersten Wertebereich, beispielsweise und ohne Beschränkung zwischen 0 und 200.000. Bei der bei Bezugszeichen 6 realisierten zweiten Information kann es sich dann um einen weiteren Code (eine Zahl) aus einem zweiten, insbesondere größeren Wertebereich handeln, beispielsweise und ohne Beschränkung zwischen 0 und 500.000. Die zweite Information könnte vorzugsweise, wie bereits erwähnt, in Form eines "Play"-Symbols codiert sein.

Der NFC-Chip 4 kann bei diesem Verwendungsbeispiel ohne Funktion bleiben; alternativ kann er im Zuge des weiter oben beschriebenen Belohnungssystems zum Einsatz kommen.

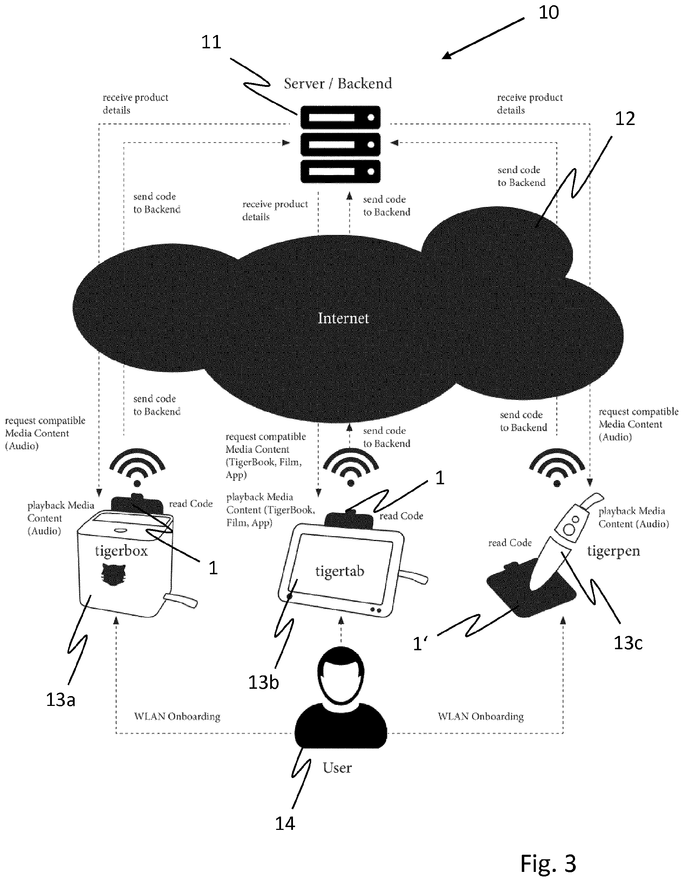

Figur 3 zeigt schematisch ein erfindungsgemäßes System für einen gesteuerten Zugriff auf digitale Medieninhalte, welches System insgesamt mit dem Bezugszeichen 10 versehen ist. Das System 10 umfasst: einen Server-Computer (Backend) 11; eine Computernetz-Verbindung (das Internet) 12; verschiedene Lese-/Ausgabegeräte (Devices, Endgeräte) 13a-13c, nämlich eine Audio-Box 13a, ein Tablet 13b und ein (Digital-)Stift 13c; und jeweils einen geeigneten Informationsträger 1', 1 pro Endgerät 13a-13c. Der Server-Computer 11 hält die in Rede stehenden Medieninhalte (nicht gezeigt) bereit. Die Lese-/Ausgabegerät 13a-13c sind über die Computernetz-Verbindung 12 mit dem Server-Computer 11 verbunden bzw. durch einen Nutzer (User) 14 verbindbar, vorzugsweise drahtlos über WLAN - wie dargestellt ("WLAN Onboarding"). Durch den jeweiligen Informationsträger 1', 1 ist wenigstens eine erste Information und eine wenigstens eine zweite Information gespeichert, wie oben anhand von Figur 1 und Figur 2 beschrieben, welche erste Information und welche zweite Information durch das betreffende Lese-/Ausgabegerät 13a-13c lesbar ist - entweder per NFC- oder per OID-Technik. Jedes Lese-/Ausgabegerät 13a-13c ist zum Ermitteln der ersten Information und der zweiten Information von dem Informationsträger 1, 1' ("lese Code" in Figur 3) und zur Übermittlung der ersten Information und der zweiten Information an den Server-Computer 11 ausgebildet und eingerichtet ("sende Code an Backend"). Der Server-Computer 11 ist dazu ausgebildet und eingerichtet, in Abhängigkeit von einem Ergebnis einer von ihm durchgeführten gemeinsamen Überprüfung der ersten Information und der zweiten Information bestimmte Medieninhalte für eine Übertragung an das anfragenden Lese-/Ausgabegerät 13a-13c freizugeben, um diese Medieninhalte mittels des Lese-/Ausgabegeräts 13a-13c auszugeben. Dazu werden zunächst Produktdetails betreffend mit einem jeweiligen Informationsträger 1, 1' verknüpfte Medieninhalte vom Server-Computer 11 an das betreffende Lese-/Ausgabegerät 13a-13c gesendet ("empfange Produkt-Details"), dann fordert das betreffende Lese-/Ausgabegerät 13a-13c geeigneten Medieninhalt vom Server-Computer 11 an ("Anforderung kompatibler Medieninhalt") und gibt ihn aus ("Wiedergabe Medieninhalt"). Vorzugsweise bringt der Nutzer 14 das betreffende Lese-/Ausgabegerät 13a-13c und den jeweiligen Informationsträger 1, 1' in Wirkverbindung und sorgt insbesondere für das Lesen/Erfassen der genannten OID/NFC Codes mittels des Lese-/Ausgabegeräts 13a-13c.

Bei als Tablet oder Audio-Box ausgestatteten Lese-/Ausgabegeräten 13a, 13b kann an diesen ein Schlitz oder Spalt oder eine andersartige Klemm-/Haltevorrichtung (nicht erkennbar) zur Aufnahme eines speziell als Karte ausgebildeten Informationsträgers 1 vorhanden sein.

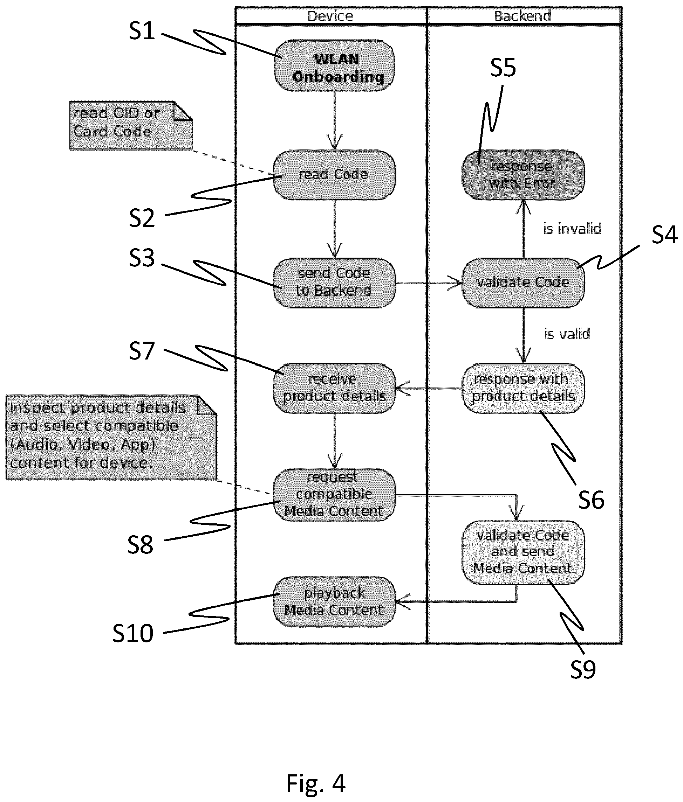

Figur 4 zeigt die wesentlichen (Verfahrens-)Abläufe, wie vorstehend anhand von Figur 3 erläutert, in Form eines Flussdiagramms. Das Lese-/Ausgabegerät ("Device") erlangt in Schritt S1 Zugang zum Internet oder einem vergleichbaren Computernetz (sog. "WLAN Onboarding"), worüber es mit dem Server-Computer "Backend") verbunden ist. In Schritt S2 wird der Produktcode (Code-Daten auf der NFC Karte ("Card Code") oder optischer OID Code, entsprechend den ersten und zweiten Informationen) mittels des Lese-/Ausgabegeräts gelesen (das Produkt entspricht dem eingangs definierten Informationsträger). Dieser Produktcode wird anschließend in Schritt S3 zur Validierung vom Lese-/Ausgabegerät an das Backend (Server-Computer) geschickt. Das Backend empfängt den Produktcode und prüft (validiert) in Schritt S4, ob zwei gelesene OID Codes (die erste und die zweite Information) in Kombination einen validen Produktcode darstellen bzw. ob ein Sicherheitscode (zweite Information) in Verbindung mit einer eindeutigen NFC-Chip-Id (erste Information) einen validen Produktcode darstellen. Dies ist in Figur 4 für beide Fälle mit "validiere Code" bezeichnet, wobei sich der Code jeweils aus der erste und der zweiten Information zusammensetzt, die zusammen überprüft werden, wie oben detailliert erläutert. Vorzugsweise ist hierzu auf dem Backend-Computer eine Liste mit zugelassenen Kombinationen aus erster Information und zweiter Kombination verfügbar ist. Bei invaliden Code-Kombinationen aus erster und zweiter Information ("ist ungültig") antwortet das Backend in Schritt S5 mit einer Fehlermeldung, die vorzugsweise durch das Lese-/Ausgabegerät ausgegeben wird. Der Backend-Computer ist in diesem Zusammenhang vorzugsweise auch dazu ausgebildet und eingerichtet, bestimmte Medieninhalte entsprechend einer Kombination aus erster Information und zweiter Information für eine Übertragung zu sperren, wenn eine Kombination aus erster Information und zweiter Information während eines vorgegebenen Zeitintervalls mehr als eine vorgegebene Anzahl von Malen und/oder von mehr als einer vorgegebenen Anzahl von Lese-/Ausgabegeräten übermittelt wurde, was in Figur 4 und speziell in Schritt S5 nicht explizit dargestellt ist. Bei einer validen Code-Kombination ("ist gültig") antwortet das Backend in Schritt S6 mit den Metadaten ("Antwort mit Produkt-Details") zu dem zugehörigen Produkt, welche Links auf die verschiedenen Medieninhalte zu dem Produkt enthalten (Audio, Video, eBook, App). Das Lese-/Ausgabegerät empfängt diese Metadaten in Schritt S7 und selektiert in Schritt S8 den von ihm abspielbaren Medieninhalt ("Auswahl kompatibler ... Inhalt"). Dann fordert es diesen vom Backend an, wobei wiederum die Code-Kombination als Autorisierung mitgeschickt wird. Bei valider Code-Kombination (Prüfung in Schritt S9) liefert das Backend die Mediendaten an das Lese-/Ausgabegerät. Die für dieses Lese-/Ausgabegerät bestimmten Medieninhalte werden in Schritt S10 abgespielt.

## Patentansprüche

1. System (10) für einen gesteuerten Zugriff auf digitale Medieninhalte, umfassend:
einen Server-Computer (11);
eine Computernetz-Verbindung (12);
ein Lese-/Ausgabegerät (13a-13c);
einen Informationsträger (1, 1');
bei dem der Server-Computer (12) digitale Medieninhalte bereithält;
bei dem das Lese-/Ausgabegerät (13a-13c) über die Computernetz-Verbindung (12) mit dem Server-Computer (11) verbunden oder verbindbar ist;
bei dem durch den Informationsträger (1, 1') wenigstens eine erste Information und eine wenigstens eine zweite Information gespeichert ist, welche erste Information und welche zweite Information durch das Lese-/Ausgabegerät (13a-13c) lesbar ist;
bei dem das Lese-/Ausgabegerät (13a-13c) zum Ermitteln der ersten Information und der zweiten Information von dem Informationsträger (1, 1') und zur Übermittlung der ersten Information und der zweiten Information an den Server-Computer (11) ausgebildet und eingerichtet ist; und
bei dem der Server-Computer (11) dazu ausgebildet und eingerichtet ist, in Abhängigkeit von einem Ergebnis einer gemeinsamen Überprüfung der ersten Information und der zweiten Information bestimmte Medieninhalte für eine Übertragung an das Lese-/Ausgabegerät (13a-13c) freizugeben, um diese Medieninhalte mittels des Lese-/Ausgabegeräts (13a-13c) auszugeben.

2. System (10) nach Anspruch 1, bei dem die erste Information mittels eines mittels NFC lesbaren Codes oder in Form eines optisch-digitalen Codes durch den Informationsträger (1, 1') gespeichert ist.

3. System (10) nach Anspruch 1, bei dem die zweite Information mittels eines mittels NFC lesbaren Codes oder in Form eines optisch-digitalen Codes durch den Informationsträger (1, 1') gespeichert ist.

4. System (10) nach Anspruch 1, bei dem der Informationsträger (1, 1') in Form einer Karte mit wenigstens einem aufgedruckten optisch-digitalen Code und/oder integriertem NFC-Chip (4) ausgebildet ist.

5. System (10) nach Anspruch 1, bei dem das Lese-/Ausgabegerät (13a-13c) in Form eines Stifts (13c), einer Audio-Box (13a) oder eines Tablet-PC (13b) ausgebildet ist.

6. System (10) nach Anspruch 1, bei dem zum Lesen der ersten und zweiten Information und zur Ausgabe von Medieninhalten ein kombiniertes Lese-/Ausgabegerät (13a-13c) vorgesehen ist oder bei dem zum Lesen der ersten und zweiten Information und zur Ausgabe von Medieninhalten getrennte Lese-/Ausgabegeräte vorgesehen sind.

7. System (10) nach Anspruch 1, bei dem der Server-Computer (11) ausgebildet und eingerichtet ist zur Übertragung von Metadaten zu jeweiligen Medieninhalten an das Lese-/Ausgabegerät (13a-13c).

8. System (10) nach Anspruch 1, bei dem das Lese-/Ausgabegerät (13a-13c) ausgebildet und eingerichtet ist zur Selektion von nutzbaren Medieninhalten, insbesondere anhand der Metadaten gemäß Anspruch 9.

9. System (10) nach Anspruch 1, bei dem die Verbindung zwischen Lese-/Ausgabegerät (13a-13c) und Server-Computer (11) drahtlos ausgebildet ist.

10. System (10) nach Anspruch 1, bei dem das Lese-/Ausgabegerät (13a-13c) ausgebildet und eingerichtet ist zur Anforderung von Medieninhalten mittels Übermittlung der ersten Information und der zweiten Information an den Server-Computer (11).

11. System (10) nach Anspruch 1, bei dem das Lese-/Ausgabegerät (13a-13c) nur zusammen mit dem Informationsträger (1, 1') zur Ausgabe von Medieninhalten nutzbar ist.

12. System (10) nach Anspruch 1, bei dem der Informationsträger (1, 1') bestimmte Medieninhalte eindeutig identifiziert, ggf. in Abhängigkeit von einer Kombination aus erster und zweiter Information.

13. System (10) nach Anspruch 1, bei dem auf dem Server-Computer (11) eine Liste mit zugelassenen Kombinationen aus erster Information und zweiter Kombination verfügbar ist.

14. System (10) nach Anspruch 1, bei dem der Server-Computer (11) dazu ausgebildet und eingerichtet ist, bestimmte Medieninhalte entsprechend einer Kombination aus erster Information und zweiter Information für eine Übertragung an das Lese-/Ausgabegerät (13a-13c) zu sperren, wenn eine Kombination aus erster Information und zweiter Information während eines vorgegebenen Zeitintervalls mehr als eine vorgegebene Anzahl von Malen und/oder von mehr als einer vorgegebenen Anzahl von Lese-/Ausgabegeräten (13a-13c) übermittelt wurde.

15. System (10) nach Anspruch 1, bei dem der Informationsträger (1, 1') neben einer Anzahl, vorzugsweise Mehrzahl optisch-digitaler Codes (6, 7) auch einen NFC-Chip (4) aufweist, wobei der Server-Computer (11) dazu ausgebildet und eingerichtet ist, Medieninhalte zu einer Kombination von auf dem NFC-Chip (4) gespeicherter erster und zweiter Information für eine Übertragung an das Lese-/Ausgabegerät (13a-13c) erst freizugeben, wenn zuvor eine vorbestimmte, zu der Kombination gehörige Anzahl, Abfolge oder Auswahl des/der optisch-digitalen Codes (6, 7) von dem Lese-/Ausgabegerät (13a-13c) an den Server-Computer (11) übermittelt wurde.
